(19) Europäisches Patentamt

European Patent Office

Office européen des brevets

(11) Veröffentlichungsnummer: **0 013 421**
**A1**

(12) **EUROPÄISCHE PATENTANMELDUNG**

(21) Anmeldenummer: **79105357.2**

(22) Anmeldetag: **24.12.79**

(51) Int. Cl.³: **A 62 B 37/00**
**A 63 B 29/02, G 01 C 9/00**

(30) Priorität: 15.01.79 DE 7900927 U

(43) Veröffentlichungstag der Anmeldung:
23.07.80 Patentblatt 80/15

(84) Benannte Vertragsstaaten:
AT CH DE FR IT

(71) Anmelder: Schnug, Manfred

D-8986 Mittelberg/Kleinwalsertal(DE)

(72) Erfinder: Schnug, Manfred

D-8986 Mittelberg/Kleinwalsertal(DE)

(74) Vertreter: Hiebsch, Gerhard F., Dipl.-Ing.
Erzbergerstrasse 5a
D-7700 Singen(DE)

(54) **Vorrichtung zur Ortung von Personen.**

㉗ Zur Ortung einer vom Schnee od. dgl. überdeckten Person soll eine Vorrichtung geschaffen werden, welche nicht nur die Ortung eines Verschütteten durch Suchtrupps erlaubt sondern auch die Befreiungsarbeit des Verschütteten selbst unterstützt.

Hierzu dient eine Vorrichtung, bei der in einem von der Person tragbaren Gehäuse (1) ein Funksender (3) sowie eine die Schieflage der Vorrichtung optisch anzeigende Einrichtung vorgesehen sind. Die Einrichtung zur Anzeige der Schieflage weist eine frostsichere Flüssigkeit (12) mit darin schwimmenden Körpern (17) auf.

EP 0 013 421 A1

-1-.

---

### Vorrichtung zur Ortung von Personen

---

Die Erfindung betrifft eine Vorrichtung zur Ortung einer
vom Schnee od. dgl. überdeckten Person. Hierzu werden derzeit Sonden verwendet, welche von Suchpersonal in den
Schnee bzw. die Lawine eingeführt werden.

Der Erfinder hat sich das Ziel gesetzt, eine derartige
Vorrichtung zu schaffen, welche nicht nur die Ortung eines
Verschütteten durch Suchtrupps erlaubt sondern auch die
Befreiungsarbeit des Verschütteten selbst unterstützt.

Zur Lösung dieser Aufgabe ist in einem von der Person -- also
dem Skiläufer od. dgl. -- tragbaren Gehäuse ein Funksender
sowie eine die Schieflage der Vorrichtung (und damit des
Trägers) optisch anzeigende Einrichtung vorgesehen. Dabei
soll letztere eine frostsichere Flüssigkeit mit darin
schwimmenden Körpern, bevorzugt Kugeln aus Kunststoff, aufweisen.

Nach einem weiteren Merkmal der Erfindung ist im Gehäuse wenigstens eine fensterartige Öffnung vorhanden,
durch welche man die in der Flüssigkeit schwimmenden
Kugeln beobachten kann - auch ist es möglich das Gehäuse insgesamt aus klarsichtigem Werkstoff zu formen
und damit alle Teile der Vorrichtung für den Betrachter
sichtbar zu halten.

Als besonders günstig hat es sich erwiesen, den die
Flüssigkeit aufnehmenden dichten Flüssigkeitsraum des
Gehäuses beleuchtbar zu gestalten, entweder durch einen
auf den Flüssigkeitsraum gerichteten Leuchtkörper oder
aber durch eine Lichtquelle, welche in die Flüssigkeit
eingetaucht ist.

Um die zur Beleuchtung des Flüssigkeitsraumes bzw. zum
Betrieb des Funksenders erforderliche, einer Batterie
entnommene Energie nicht unnötig zu beanspruchen, sind
beide Stromverbraucher von dem Träger der Vorrichtung
gemeinsam oder einzeln in Betrieb setzbar, beispielsweise durch am Gehäuse angeordnete Druck- oder Schiebeschalter. Die Ausgestaltung der Schalter soll -- ebenso
wie die Formgebung des Gehäuses -- der Forderung Rechnung
tragen, alle Teile verletzungssicher zu gestalten.

S-136

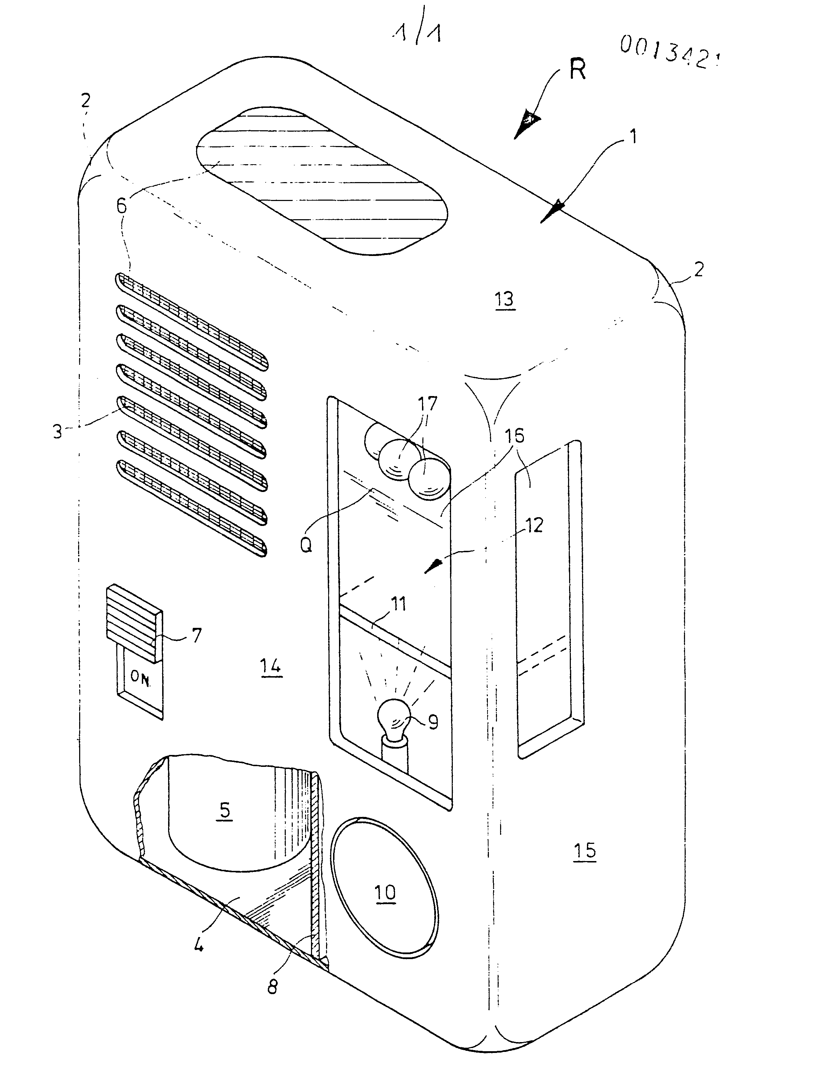

Weitere Vorteile, Merkmale und Einzelheiten der Erfindung ergeben sich aus der nachfolgenden Beschreibung eines bevorzugten Ausführungsbeispiels sowie anhand der Zeichnung, deren einzige Figur eine -- teilweise geschnittene -- Schrägsicht auf eine erfindungsgemäße Vorrichtung erkennen läßt.

In einem quaderförmigen Gehäuse 1 mit gerundeten Ecken 2 ist unterhalb eines Funksenders 3 in einem Batterieraum 4 eine Stromquelle 5 angeordnet. Der im Bereich von Gehäuseschlitzen 6 angebrachte Funksender 3 ist mittels eines Schalters 7 in Betrieb setzbar.

Den Batterieraum 4 trennt eine Zwischenwand 8 von einer Beleuchtungseinrichtung, welche aus einem Leuchtkörper 9 und einem in dessen Stromzuführung eingefügten Druckschalter 10 besteht.

Der Leuchtkörper 9 ist durch eine Klarsichtplatte 11 von einem Flüssigkeitsraum 12 getrennt, kann jedoch -- bei einer anderen Ausführungsform -- auch wasserdicht gekapselt sein und in jenen Flüssigkeitsraum 12 einragen.

Im Bereich des Flüssigkeitsraumes 12 sind in wenigstens einer der Gehäusewandungen 13,14,15 Fensterelemente 16 angeordnet, hinter denen die gegebenenfalls beleuchtete Flüssigkeit Q des dichten Flüssigkeitsraumes 12 sowie darin schwimmende Kugeln 17 aus Gummi oder Kunststoff beobachtet werden können.

S-136

Die beschriebene Vorrichtung R weist bevorzugt die
Größe eines Körpers auf, der etwa von zwei nebeneinander gelegten Zigarettenschachteln üblicher Form
gebildet wird; jedoch sind beliebige andere Dimensionen
möglich. Vorteilhafterweise sollte jedoch eine Größe
verwendet werden, welche ein die Vorrichtung R benutzender Skifahrer ohne Behinderung an seine Bekleidung befestigen und tragen kann.

Dank dieser Vorrichtung R ist es nun möglich, den Benutzer im Falle einer Verschüttung durch eine Lawine
leicht aufzufinden; der Funksender 3 kann auf eine bestimmte Welle eines Empfängers eingestellt werden und
erzeugt in diesem einen Pfeif- oder Brummton, wodurch
die Lage des Verschütteten festgestellt zu werden vermag.

Die in dem aus Kunststoff geformten Gehäuse 1 untergebrachte Flüssigkeit ist mit Glyzerin oder einem anderen Alkohol versetzt, um auch bei sehr niedrigen Umgebungstemperaturen -- beispielsweise bei -40$^{\circ}$ C --
nicht zu gefrieren. Dank der Leuchteinrichtung 9,10
sind die in der Flüssigkeit Q schwimmenden Kugeln 17
zu beobachten, welche in Abhängigkeit von Auftrieb
bzw. Schwerkraft die Lage der Vorrichtung R deutlich
werden lassen und als Richtungsweiser für die Befreiungsbemühungen des Verschütteten dienen können.

P A T E N T A N S P R Ü C H E
================================

1. Vorrichtung zur Ortung einer vom Schnee od. dgl.
   überdeckten Person,

   dadurch gekennzeichnet,

   daß in einem von der Person tragbaren Gehäuse (1)
   ein Funksender (3) sowie eine die Schieflage der
   Vorrichtung optisch anzeigende Einrichtung (17, Q)
   vorgesehen sind.

2. Vorrichtung nach Anspruch 1, dadurch gekennzeichnet,
   daß die Einrichtung zur Anzeige der Schieflage eine
   frostsichere Flüssigkeit (Q) mit darin schwimmenden
   Körpern (17) aufweist.

3. Vorrichtung nach Anspruch 2, dadurch gekennzeichnet,
   daß die Körper (17) Kugeln aus Kunststoff od. dgl.
   sind.

4. Vorrichtung nach einem der Ansprüche 1 bis 3, gekennzeichnet durch wenigstens eine fensterartige Ausnehmung (16) des Gehäuses (1) im Bereich eines die
   Flüssigkeit (Q) aufnehmenden dichten Raumes (12).

5. Vorrichtung nach einem der Ansprüche 1 bis 4, dadurch gekennzeichnet, daß das Gehäuse (1) wenigstens teilweise aus klarsichtigem Werkstoff geformt ist.

6. Vorrichtung nach wenigstens einem der Ansprüche 1 bis 5, dadurch gekennzeichnet, daß der Flüssigkeitsraum (12) beleuchtbar ausgebildet ist.

7. Vorrichtung nach Anspruch 6, gekennzeichnet durch einen am/im Flüssigkeitsraum (12) angeordneten und an eine Stromquelle (5) der Vorrichtung (R) angeschlossenen Leuchtkörper (9) sowie durch ein zwischen Stromquelle und Leuchtkörper vorgesehenes Schaltelement (10).

8. Vorrichtung nach wenigstens einem der Ansprüche 1 bis 7, dadurch gekennzeichnet, daß der Funksender (3) an die Stromquelle angeschlossen und zwischen beide ein Schaltelement (7) eingefügt ist.

9. Vorrichtung nach wenigstens einem der Ansprüche 1 bis 8, dadurch gekennzeichnet, daß das Gehäuse (1) aus Kunststoff geformt und seine Ecken (2) und/oder Kanten gerundet ausgebildet sind.

001342·

R

2

1

6

2

13

3

17

16

Q

12

11

7

ON

14

9

5

15

10

4

8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 1 017 917 (W. WENDT KG)<br>* Anspruch 1 *<br>-- | 1 |
| | DE - B2 - 2 555 665 (A. RICHTSCHEID)<br>* Anspruch 1 *<br>-- | 1 |
| | SPORT + MODE, Nr. 11, 1973<br>"Neuer Trumpf im Kampf gegen den Lawinentod"<br>Seiten 34 und 35<br>-- | 1 |
| A | AT - B - 116 217 (R. HARTMANN)<br>* Ansprüche 1, 2 *<br>-- | |
| A | AT - B - 31 887 (A.J. STASTNÝ)<br>* Anspruch 1 *<br>-- | |
| A | CH - A - 168 481 (O. SACCHETTI)<br>* Patentanspruch *<br>---- | |

**KLASSIFIKATION DER ANMELDUNG (Int Cl.3)**

A 62 B 37/00
A 63 B 29/02
G 01 C 9/00

**RECHERCHIERTE SACHGEBIETE (Int. Cl.3)**

A 62 B 33/00
A 62 B 37/00
A 63 B 29/02
G 01 C 9/00
G 01 C 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus anderen Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 18-03-1980 | KANAL |